# EUROPEAN PATENT SPECIFICATION

(11) **EP 4 128 956 B1**
(45) Date of publication and mention of the grant of the patent: **26.08.2026**
(21) Application number: 21830166.1
(22) Date of filing: 21.04.2021
(51) Int. Cl.: H04W 48/12, H04W 48/18, H04W 48/20, H04W 48/16, H04W 24/08, H04W 4/06, H04W 76/27

(54) **CELL SELECTION UTILIZING INFORMATION OF SUPPORTED NETWORK SLICES**
ZELLAUSWAHL UNTER VERWENDUNG VON INFORMATIONEN UNTERSTÜTZTER NETZWERK-SLICES
SÉLECTION DE CELLULES EN UTILISANT DES INFORMATIONS DE TRANCHES DE RÉSEAU PRISES EN CHARGE

(30) Priority: 24.06.2020 US 202063043355 P
(43) Date of publication of application: 08.02.2023
(73) Proprietor: Nokia Technologies Oy, 02610 Espoo (FI)
(72) Inventor: NASEER-UL-ISLAM, Muhammad, 81737 Munich (DE); BULAKCI, Ömer, 80997 Munich (DE); AWADA, Ahmad, 81249 Munich (DE)
(74) Representative: Mudge, Kevin
(86) International application number: PCT/FI2021/050295
(87) International publication number: WO 2021/260255

(56) References cited:
- EP-A1- 3 567 928
- EP-A1- 3 589 064
- EP-A1- 3 589 064
- WO-A9-2018/171408
- US-A1- 2020 052 803
- HUAWEI, HISILICON: "Slice Availability and Discovery in RAN", 3GPP DRAFT; R2-1701218, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Athens, Greece; 20170213 - 20170217, 12 February 2017 (2017-02-12), Mobile Competence Centre ; 650, route des Lucioles ; F-06921 Sophia-Antipolis Cedex ; France , XP051211907
- "3rd Generation Partnership Project; Technical Specification Group Services and System Aspects; Study on enhancement of network slicing; Phase 2 (Release 17)", 3GPP STANDARD; TECHNICAL REPORT; 3GPP TR 23.700-40, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V0.4.0, 19 June 2020 (2020-06-19), Mobile Competence Centre ; 650, route des Lucioles ; F-06921 Sophia-Antipolis Cedex ; France , pages 1 - 143, XP051924078

## Description

### TECHNICAL FIELD

Various example embodiments relate generally to cell re-selection or selection process in a radio resource control (RRC) idle mode based on broadcasted information regarding network slices.

### BACKGROUND

It is common for a user equipment (UE) to perform cell re-selection after entering an idle mode. However, it may happen that the UE selects a suboptimal cell. One example of a suboptimal cell is a cell which does not support a service and/or slice required by the UE. However, providing the service/slice supports of each cell in a broadcast would consume a lot of resources. Therefore, solutions are needed which offer a balance between resource consumption and efficient information provision to the UE to assist the UE to select an optimal cell.

EP3589064 discloses a method for prioritizing different neighboring cells for handover based on quality measurements and network slice support via an offset value.

WO2018171408 discloses a method for neighboring cell prioritization based on signal quality and network slice priority via a priority offset.

### BRIEF DESCRIPTION

According to some aspects, there is provided the subject matter of the independent claims. Some further aspects are defined in the dependent claims.

The embodiments that do not fall under the scope of the claims are to be interpreted as examples useful for understanding the disclosure.

### LIST OF THE DRAWINGS

In the following, the invention will be described in greater detail with reference to the embodiments and the accompanying drawings, in which
Figure 1 presents a communication network,
Figure 2 shows a cell layout,
Figure 3 to 5 show methods,
Figure 6 depicts a signaling flow diagram, and
Figures 7 and 8 illustrate apparatuses,

### DESCRIPTION OF EMBODIMENTS

The following embodiments are exemplary. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments. For the purposes of the present disclosure, the phrases "A or B" and "A and/or B" means (A), (B), or (A and B). For the purposes of the present disclosure, the phrase "A, B, and/or C" means (A), (B), (C), (A and B), (A and C), (B and C), or (A, B, and C).

Embodiments described may be implemented in a radio system, such as one comprising at least one of the following radio access technologies (RATs): Worldwide Interoperability for Micro-wave Access (WiMAX), Global System for Mobile communications (GSM, 2G), GSM EDGE radio access Network (GERAN), General Packet Radio Service (GRPS), Universal Mobile Telecommunication System (UMTS, 3G) based on basic wideband-code division multiple access (W-CDMA), high-speed packet access (HSPA), Long Term Evolution (LTE), LTE-Advanced, and enhanced LTE (eLTE). Term 'eLTE' here denotes the LTE evolution that connects to a 5G core. LTE is also known as evolved UMTS terrestrial radio access (EUTRA) or as evolved UMTS terrestrial radio access network (EUTRAN). A term "resource" may refer to radio resources, such as a physical resource block (PRB), a radio frame, a subframe, a time slot, a subband, a frequency region, a sub-carrier, a beam, etc. The term "transmission" and/or "reception" may refer to wirelessly transmitting and/or receiving via a wireless propagation channel on radio resources

The embodiments are not, however, restricted to the systems/RATs given as an example but a person skilled in the art may apply the solution to other communication systems provided with necessary properties. One example of a suitable communications system is the 5G system. The 3GPP solution to 5G is referred to as New Radio (NR). 5G has been envisaged to use multiple-input-multiple-output (MIMO) multi-antenna transmission techniques, more base stations or nodes than the current network deployments of LTE (a so-called small cell concept), including macro sites operating in co-operation with smaller local area access nodes and perhaps also employing a variety of radio technologies for better coverage and enhanced data rates. 5G will likely be comprised of more than one radio access technology / radio access network (RAT/RAN), each optimized for certain use cases and/or spectrum. 5G mobile communications may have a wider range of use cases and related applications including video streaming, augmented reality, different ways of data sharing and various forms of machine type applications, including vehicular safety, different sensors and real-time control. 5G is expected to have multiple radio interfaces, namely below 6GHz, cmWave and mmWave, and being integrable with existing legacy radio access technologies, such as the LTE.

The current architecture in LTE networks is distributed in the radio and centralized in the core network. The low latency applications and services in 5G require to bring the content close to the radio which leads to local break out and multi-access edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. It also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications). Edge cloud may be brought into RAN by utilizing network function virtualization (NVF) and software defined networking (SDN). Using edge cloud may mean access node operations to be carried out, at least partly, in a server, host or node operationally coupled to a remote radio head or base station comprising radio parts. Network slicing allows multiple virtual networks to be created on top of a common shared physical infrastructure. The virtual networks are then customised to meet the specific needs of applications, services, devices, customers or operators.

In radio communications, node operations may in be carried out, at least partly, in a central/centralized unit, CU, (e.g. server, host or node) operationally coupled to distributed unit, DU, (e.g. a radio head/node). It is also possible that node operations will be distributed among a plurality of servers, nodes or hosts. It should also be understood that the distribution of labour between core network operations and base station operations may vary depending on implementation. Thus, 5G networks architecture may be based on a so-called CU-DU split. One gNB-CU controls several gNB-DUs. The term 'gNB' may correspond in 5G to the eNB in LTE. The gNBs (one or more) may communicate with one or more UEs. The gNB-CU (central node) may control a plurality of spatially separated gNB-DUs, acting at least as transmit/receive (Tx/Rx) nodes. In some embodiments, however, the gNB-DUs (also called DU) may comprise e.g. a radio link control (RLC), medium access control (MAC) layer and a physical (PHY) layer, whereas the gNB-CU (also called a CU) may comprise the layers above RLC layer, such as a packet data convergence protocol (PDCP) layer, a radio resource control (RRC) and an internet protocol (IP) layers. Other functional splits are possible too. It is considered that skilled person is familiar with the OSI model and the functionalities within each layer.

In an embodiment, the server or CU may generate a virtual network through which the server communicates with the radio node. In general, virtual networking may involve a process of combining hardware and software network resources and network functionality into a single, software-based administrative entity, a virtual network. Such virtual network may provide flexible distribution of operations between the server and the radio head/node. In practice, any digital signal processing task may be performed in either the CU or the DU and the boundary where the responsibility is shifted between the CU and the DU may be selected according to implementation.

Some other technology advancements probably to be used are Software-Defined Networking (SDN), Big Data, and all-IP, to mention only a few non-limiting examples. For example, network slicing may be a form of virtual network architecture using the same principles behind software defined networking (SDN) and network functions virtualisation (NFV) in fixed networks. SDN and NFV may deliver greater network flexibility by allowing traditional network architectures to be partitioned into virtual elements that can be linked (also through software). Network slicing allows multiple virtual networks to be created on top of a common shared physical infrastructure. The virtual networks are then customised to meet the specific needs of applications, services, devices, customers or operators.

The plurality of gNBs (access points/nodes), each comprising the CU and one or more DUs, may be connected to each other via the Xn interface over which the gNBs may negotiate. The gNBs may also be connected over next generation (NG) interfaces to a 5G core network (5GC), which may be a 5G equivalent for the core network of LTE. Such 5G CU-DU split architecture may be implemented using cloud/server so that the CU having higher layers locates in the cloud and the DU is closer to or comprises actual radio and antenna unit. There are similar plans ongoing for LTE/LTE-A/eLTE as well. When both eLTE and 5G will use similar architecture in a same cloud hardware (HW), the next step may be to combine software (SW) so that one common SW controls both radio access networks/technologies (RAN/RAT). This may allow then new ways to control radio resources of both RANs. Furthermore, it may be possible to have configurations where the full protocol stack is controlled by the same HW and handled by the same radio unit as the CU.

It should also be understood that the distribution of labour between core network operations and base station operations may differ from that of the LTE or even be non-existent. Some other technology advancements probably to be used are Big Data and all-IP, which may change the way networks are being constructed and managed. 5G (or new radio, NR) networks are being designed to support multiple hierarchies, where MEC servers can be placed between the core and the base station or nodeB (gNB). It should be appreciated that MEC can be applied in 4G networks as well.

5G may also utilize satellite communication to enhance or complement the coverage of 5G service, for example by providing backhauling. Possible use cases are providing service continuity for machine-to-machine (M2M) or Internet of Things (IoT) devices or for passengers on board of vehicles, or ensuring service availability for critical communications, and future rail-way/maritime/aeronautical communications. Satellite communication may utilize geostationary earth orbit (GEO) satellite systems, but also low earth orbit (LEO) satellite systems, in particular mega-constellations (systems in which hundreds of (nano)satellites are deployed). Each satellite in the mega-constellation may cover several satellite-enabled network entities that create on-ground cells. The on-ground cells may be created through an on-ground relay node or by a gNB located on-ground or in a satellite.

The embodiments may be also applicable to narrow-band (NB) Internet-of-things (IoT) systems which may enable a wide range of devices and services to be connected using cellular telecommunications bands. NB-IoT is a narrowband radio technology designed for the Internet of Things (IoT) and is one of technologies standardized by the 3rd Generation Partnership Project (3GPP). Other 3GPP IoT technologies also suitable to implement the embodiments include machine type communication (MTC) and eMTC (enhanced Machine-Type Communication). NB-IoT focuses specifically on low cost, long battery life, and enabling a large number of connected devices. The NB-IoT technology is deployed "in-band" in spectrum allocated to Long Term Evolution (LTE) - using resource blocks within a normal LTE carrier, or in the unused resource blocks within a LTE carrier's guard-band - or "standalone" for deployments in dedicated spectrum.

The embodiments may be also applicable to device-to-device (D2D), machine-to-machine, peer-to-peer (P2P) communications. The embodiments may be also applicable to vehicle-to-vehicle (V2V), vehicle-to-infrastructure (V2I), infrastructure-to-vehicle (I2V), or in general to V2X or X2V communications.

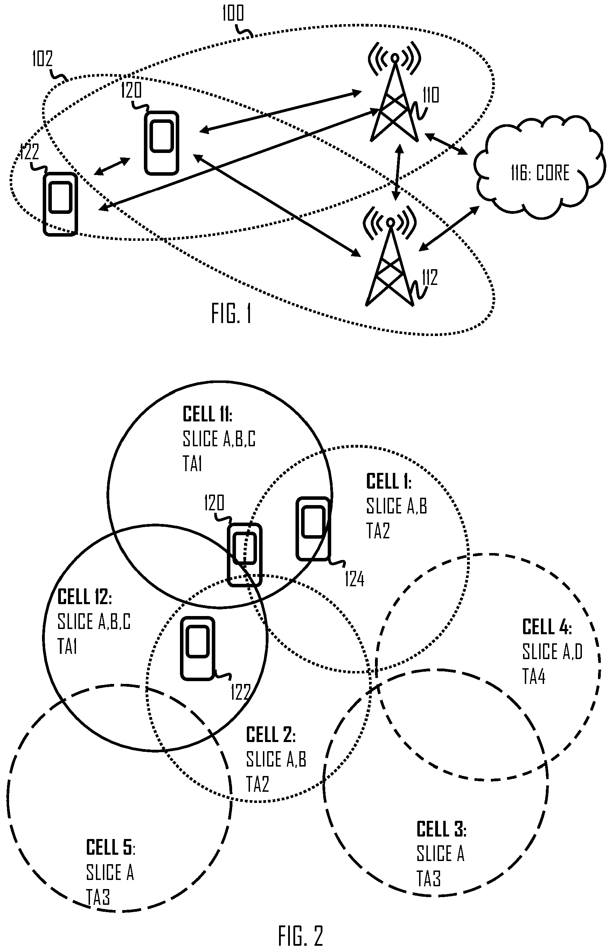

Figure 1 illustrates an example of a communication system to which embodiments of the invention may be applied. The system may comprise a control node 110 providing one or more cells, such as cell 100, and a control node 112 providing one or more other cells, such as cell 102. Each cell may be, e.g., a macro cell, a micro cell, femto, or a pico cell, for example. In another point of view, the cell may define a coverage area or a service area of the corresponding access node. The control node 110, 112 may be an evolved Node B (eNB) as in the LTE and LTE-A, ng-eNB as in eLTE, gNB of 5G, or any other apparatus capable of controlling radio communication and managing radio resources within a cell. The control node 110, 112 may be called a base station, network node, or an access node.

The system may be a cellular communication system composed of a radio access network of access nodes, each controlling a respective cell or cells. The access node 110 may provide user equipment (UE) 120 (one or more UEs) with wireless access to other networks such as the Internet. The wireless access may comprise downlink (DL) communication from the control node to the UE 120 and uplink (UL) communication from the UE 120 to the control node.

Additionally, although not shown, one or more local area access nodes may be arranged such that a cell provided by the local area access node at least partially overlaps the cell of the access node 110 and/or 112. The local area access node may provide wireless access within a sub-cell. Examples of the sub-cell may include a micro, pico and/or femto cell. Typically, the sub-cell provides a hot spot within a macro cell. The operation of the local area access node may be controlled by an access node under whose control area the sub-cell is provided. In general, the control node for the small cell may be likewise called a base station, network node, or an access node.

There may be a plurality of UEs 120, 122 in the system. Each of them may be served by the same or by different control nodes 110, 112. The UEs 120, 122 may communicate with each other, in case D2D communication interface is established between them.

The term "terminal device" or "UE" refers to any end device that may be capable of wireless communication. By way of example rather than limitation, a terminal device may also be referred to as a communication device, user equipment (UE), a Subscriber Station (SS), a Portable Subscriber Station, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (loT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. In the following description, the terms "terminal device", "communication device", "terminal", "user equipment" and "UE" may be used interchangeably.

In the case of multiple access nodes in the communication network, the access nodes may be connected to each other with an interface. LTE specifications call such an interface as X2 interface. For IEEE 802.11 network (i.e. wireless local area network, WLAN, WiFi), a similar interface Xw may be provided between access points. An interface between an eLTE access point and a 5G access point, or between two 5G access points may be called Xn. Other communication methods between the access nodes may also be possible. The access nodes 110 and 112 may be further connected via another interface to a core network 116 of the cellular communication system. The LTE specifications specify the core network as an evolved packet core (EPC), and the core network may comprise a mobility management entity (MME) and a gateway node. The MME may handle mobility of terminal devices in a tracking area encompassing a plurality of cells and handle signalling connections between the terminal devices and the core network. The gateway node may handle data routing in the core network and to/from the terminal devices. The 5G specifications specify the core network as a 5G core (5GC), and there the core network may comprise e.g. an access and mobility management function (AMF) and a user plane function/gateway (UPF), to mention only a few. The AMF may handle termination of non-access stratum (NAS) signalling, NAS ciphering & integrity protection, registration management, connection management, mobility management, access authentication and authorization, security context management. The UPF node may support packet routing & forwarding, packet inspection and QoS handling, for example.

Network slicing is a key feature to support different services using the same underlying mobile network infrastructure. Network slicing allows the creation of multiple virtual networks atop a shared physical infrastructure. In such network scenario, logical (software-based) partitions are critical, devoting capacity to certain purposes dynamically, according to need. As needs change, so can the devoted resources. Using common resources such as storage and processors, network slicing permits the creation of slices devoted to logical, self-contained, and partitioned network functions.

Network slices (or slices, in short) can differ either in their service requirements like Ultra-Reliable Low Latency Communication (URLLC) and enhanced Mobile Broadband (eMBB) or the tenant that provides those services. A network slice may be uniquely identified via the S-NSSAI (Single-Network Slice Selection Assistance Information), shown below in Table 1. Current 3GPP specifications allow a UE to be simultaneously connected and served by at most eight S-NSSAIs. On other hand, each cell may support a large number of network slices: The cell may support tens or even hundreds of S-NSSAIs.

**Table 1: Format of S-NSSAI**

| SST | SD |
|---|---|
| 8 bits | 24 bits |

The S-NSSAI may include both Slice Service Type (SST) and Slice Differentiator (SD) field with a total length of 32 bits or include only SST field part in which case the length of S-NSSAI is 8 bits only. The SST field may have standardized and non-standardized values. Values 0 to 127 belong to the standardized SST range. For instance, SST value of 1 may indicate that the slice is suitable for handling of 5G eMBB, 2 for handling of URLLC, etc. The SD field is operator-defined.

For mobility among neighbouring cells, the idle mode UEs rely on Cell Re-selection procedure. The purpose of cell re-selection procedure is to ensure that the idle mode UE is camped on the most suitable cell. The network can influence this procedure by adjusting the broadcast information of individual cells in different SIBs (System Information Blocks). These SIBs may contain several configuration parameters that the UE may use to evaluate the radio quality of currently camped-on cell and neighbouring cells to switch the camped-on cell as the UE moves across the borders of different cells. Currently, cell re-selection procedure is slice agnostic i.e. the UE does not consider the slice support of the neighbouring cells while evaluating the neighbour cells.

A registration area (RA) is a list of Tracking Areas (TAs) that support the same slices from a UE perspective. When a UE registers to the network it can indicate the slices to which it might need access (requested S-NSSAIs). The (core) network analyses the UE profile and subscription data to verify a list of slices the UE can have access to. As a result, the network may send a list of "allowed slices" to the UE. The list of allowed slices could be different or only a subset of the requested slices from the UE request in registration process. The reason could be that the UE does not have access to a specific slice or the slice is not supported in the current location (TA) in which the registration request was initiated. If the allowed slices contain at least one slice, then the network also configures a "Registration Area" for that UE. This registration area contains a list of TAs in which all the allowed slices of the UE are supported. The core network knows the current TA of the UE from registration request and knows the slice support of the neighbouring TAs. Based on this information the core network can configure the list of TAs for the UE in which the slice support is homogenous for the requesting UE. Once the UE goes outside of the TAs in the Registration Area, it needs to perform a Registration Area Update, and the core network re-evaluates the UE requested slices to configure a new registration area.

It should be noted that the core network knows the location of an idle UE in RM-REGISTERED state in terms of an RA. This means the UE is registered to a public land mobile network (PLMN) in order to perform procedure in any of the RRC states. In case of a network-originated service request, the AMF pages the gNBs belonging to the TA of the RA. AMF can apply different paging policies, e.g., page only part of the RA considering the last TA where the UE made the RA update. Thus, there is a trade-off between the size of the RA and paging overhead vs. RA update frequency. In other words, large RA implies fewer RA updates but more paging signalling, whereas small RA implies more RA updates but less paging signalling. In addition, with smaller RA, the UE could be reached faster and thus might be preferred for certain services with delay constraints. It is therefore likely that a UE associated to a network slice with very large coverage area might be configured with a RA that does not include all the TAs in which the slice is supported but only a limited set of TAs based on the current TA of the UE. Moreover, the neighbouring gNBs exchange slice support information per TA over the Xn interface. Such information exchange may take place, e.g., during *Xn Set-Up* and *NG-RAN Node Configuration Update* procedures.

The cell re-selection procedure as defined currently in 3GPP is network slice agnostic. This means when the UE evaluates neighbouring cells for cell re-selection, the UE does not consider the network slices supported by those cells (also the UE does not know the slices supported by the cell, as the slice support information is not broadcasted). This could lead to some problems in case of non-homogeneous slice support in the neighbouring cells. This could especially be relevant at the border of network slices that need to be supported only within a limited coverage area like enterprises, factories, campuses, etc.

As an example deployment, let us consider Figure 2 showing a network deployment with multiple network slices that have different coverages. The cells in Figure 2 may be provided by the same or by different operators. As long as, the UE is allowed to access different networks and can perform a HO/cell re-selection among the border cells of two operators, the embodiments are applicable to a scenario with different operators. In such a scenario, a mapping between the slices provided by different operators may be additionally utilized, e.g., a slice with an identifier S-NSSAI X in one operator may map to a slice with an identifier S-NSSAI Y in another operator. The network slices in Figure 2 are:
- Slice A is a basic eMBB slice that the operator uses for basic connectivity for all UEs and this slice is supported in all the cells of the network.
- Slice B is an enterprise specific eMBB slice that needs to be supported only within the enterprise area, for example, a factory area. For this reason, Slice B is only supported in Cell 1, Cell 2, Cell 11 and Cell 12 providing coverage for the e.g. enterprise area.
- Slice C is an enterprise specific URLLC slice that needs to be supported in only specific locations of the enterprise/factory area. Therefore, Slice C in only supported in Cell 11 and Cell 12. Such a deployment might be required, for example, for automated manufacturing using robotic control that needs to be supported only in the manufacturing areas of the factory while the enterprise specific eMBB slice would need to be supported throughout the factory area.
- Slice D is another enterprise specific slice that belongs to another enterprise. Slice D is also supported in a limited area and only Cell 4 supports this slice.

As 3GPP introduced a limitation that the slice support in the TA should be homogenous, therefore, in this deployment an example allocation of TA is as follows and as shown with different line styles of the circles in Figure 2:
- TA1, depicted with solid circles in Figure 2: consists of Cell 11 and Cell 12 as they support Slice A, Slice B and Slice C.
- TA2, depicted with dotted circles in Figure 2: consists of Cell 1 and Cell 2 as they support Slice A and Slice B.

- TA3, depicted with long dashed circles in Figure 2: consists of Cell 3 and Cell 5 as they only support Slice A.
- TA4, depicted with short dashed circle in Figure 2: consists of Cell 4 as it supports Slice A and Slice D.

Let us consider UE 120 in Cell 11 that needs access to Slice A, Slice B and Slice C. It is configured with a RA1 = {TA1} because the three slices are only supported in this TA. If the UE goes out of this TA, for example to Cell 1 or Cell 2, it may perform a RA update and it may be notified by the network that it cannot access Slice C in the new TA. Therefore, it will be good to keep this UE camped on cells in TA1 as far as possible. It is noted that the radio coverage of the cells and their border areas are not clearly defined due to shadowing (caused by diffraction, reflection and scattering of the emitted rays), thus posing geographical mobility restrictions may not be a valid option.

In contrast UE 122 in cell 12 needs access to Slice A and B. Consequently, it may be configured with a RA2 = {TA1, TA2} because both slices are supported in the two TAs. For this UE 122, it should not be a problem to move from Cell 12 to either Cell 1 or Cell 2 and there is no need to keep this UE 122 in Cell 12 or TA1 when the radio conditions from Cell 1 or Cell 2 becomes better than Cell 12. But again, if UE 122 moves closer to the border towards either TA3 or TA4, it would be good to keep UE 122 camped on cells of TA1 and TA2 as far as possible.

Lastly, if there is a general public UE 124 in cell 11 that only connects to basic Slice A (e.g. employees working in the enterprise area or guest/visitors), there is no need to keep UE 124 camped on certain cell once the neighbor becomes better than the current cell.

Currently, cell-ranking criterion Rₛ for a serving cell and Rₙ for neighbouring cells is defined by: ${R}_{s} = {Q}_{meas , s} + {Q}_{hyst} - {Qoffset}_{temp}$ ${R}_{n} = {Q}_{meas , n} - Qoffset - {Qoffset}_{temp}$ where:

**Table 2: Some parameters for cell selection**

| | |
|---|---|
| Qₘₑₐₛ | RSRP measurement quantity used in cell reselections. |
| Qoffset | -For intra-frequency: Equals to Qoffset_{s,n}, if Qoffset_{s,n} is valid, otherwise this equals to zero. |
| | -For inter-frequency: Equals to Qoffset_{s,n} plus Qoffset_{frequency}, if Qoffset_{s,n} is valid, otherwise this equals to Qoffset_{frequency}. |
| Qoffsetₜₑₘₚ | Offset temporarily applied to a cell. |
| Qhyst | The parameter QHyst is introduced to prevent from ping pong re-selections |

The UE shall perform ranking of all cells that fulfil the cell selection criterion S. The cells shall be ranked according to the R criteria specified above by deriving Q_{meas,n} and Q_{meas,s} and calculating the R values using averaged reference signal received power (RSRP) results.

From above description, it is clear that one common cell-reselection configuration cannot support different requirements of the various UEs. Different UEs need different configuration even when camped on same cell and moving to the same neighboring cells. This differentiated behavior depends on the slices the UE wants to access. Therefore, there is a need to provide a solution to a problem of how to provide different configurations for cell re-selection to different UEs in the same cell, such that the UEs wanting access to slices with limited coverage remain in that coverage as far as possible but at the same time UEs wanting access to slice with only wide area coverage are not unnecessarily camped on a cell when the neighbor is better than the current cell.

To at least partially tackle this problem, there is proposed a solution for providing efficient and reliable cell selection/re-selection procedure for idle mode UEs. Even though depicted for idle mode, the procedures and embodiments depicted herein apply equally to UEs in an RRC inactive mode. Although applicable to many networks, we will in the following examples focus on 5G, for the sake of simplicity.

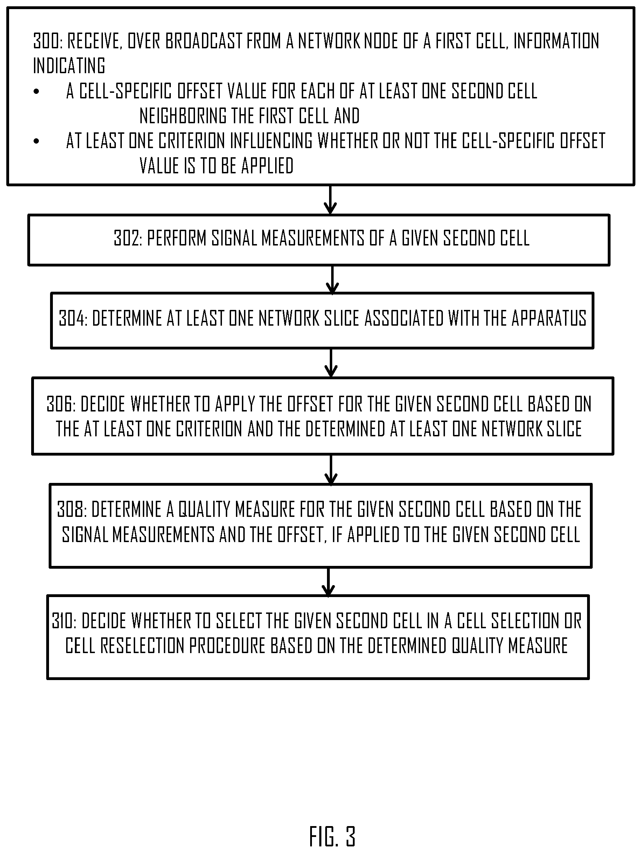

Figure 3 depicts an example method. However, the order of the steps of Figure 3 may vary from what is shown. The method may be performed by a user equipment, such as any of the UEs 120, 122 or 124. Let us consider, for simplicity, that the method is performed by the UE 120.

Accordingly, as shown in Figure 3, the UE 120 may in step 300, receive, over broadcast from a network node of a first cell, information of at least one second cell neighboring the first cell. The UE 120 may receive this information in an RRC idle (or inactive) mode over broadcast. The information may be carried in a system information block (SIB), for example.

The definition of neighbor cell may comprise only immediate neighbor cell(s), or a wider group of cells in a predetermined vicinity of the first cell. As an example, when the first cell is cell 11, the second cells may comprise cells 1, 2 and 12. However, it needs to be noted that the second cells may comprise all or a subset of all cells neighboring the first cell.

In one embodiment, the at least one second cell comprises only cells that are neighboring the first cell by the definition mentioned above and are not in the same tracking area (TA) as the first cell. Therefore, in this embodiment, the second cells for cell 11 are only cells 1 and 2, since cell 12 is in the same TA as cell 11.

In one embodiment, the at least one second cell comprises only cells that are neighboring the first cell by the definition mentioned above and do not support all the slices supported by the first cell broadcasting the information. For example, there may not be any second cells for cell 5, as all neighboring cells support slice A.

The broadcasted information may comprise at least two information elements (IEs). The information (e.g. one IE of the information) indicates at least a cell-specific offset value for each of the at least one second cell. The offset value may be for offsetting signal measurement results, such as signal strength or quality, for example. The offset value may be an absolute value or a value relative to an offset value of another second cell. The offset value may be the same for each second cell or it may be different for different second cells. I.e. in an embodiment each offset value may be determined separately for each cell. The determination of the offset value may be made by the first cell or it may be made by the respective second cell and indicated to the first cell over Xn connection. In an embodiment, the value of the offset for a second cell is dependent on which network slices the second cell supports or does not support. For example, if the slice support of the neighboring cell is poor, then a higher offset is given to that neighboring second cell than to another neighboring second cell having better slice support. Furthermore, radio conditions reported by the UE may affect the setting of the offset, e.g. how big is the radio coverage overlap among the two cells and how drastically the radio conditions on the border changes between the two cells. Yet in one embodiment, the offset value can be provided by a management plane, e.g., management data analytics functions or a data analytics function.

The information (e.g. second IE) further indicates at least one criterion indicating or at least influencing whether or not the cell-specific offset value is to be applied for the corresponding second cell by the user equipment. In an embodiment, the criteria on whether to use the offset is second cell -specific. In an embodiment, the cell-specific offset value is applied by the UE 120 in cell selection or cell-reselection procedure. A cell selection is a procedure that a UE performs after powering on (e.g. after PLMN selection), while cell re-selection is a process in which an idle UE (or an inactive UE) selects a cell.

Even though described in the application so that the broadcast comprises for each of the second cells the IEs of at least one criterion and cell-specific offset, in some embodiments the broadcast may comprise second cells which have empty IEs in one or both of these IEs, or have e.g. zero as the offset.

In step 302, the UE 120 performs signal measurements of a given second cell or of a plurality of second cells. This may comprise e.g. measuring RSRP or RSRQ of the respective second cell. As a result of this step, the UE may determine signal strength and/or quality of the respective second cell or cells.

In step 304, the UE 120 determines at least one network slice associated with the UE 120. The at least one network slice associated with the UE 120 may in an embodiment comprise at least one network slice allowed for the UE 120. The allowed network slices may be based on allowed slices, which could be different or only a subset of the requested slices from the UE request in registration process, as explained above.

In an embodiment, each network slice provides one or more specific services. Thus, the slice may be used to carry one or more services to/from the UE. The at least one service associated with the UE 120 may indicate one or more slices associated with the UE. E.g. services may refer to a type of traffic, such as one of eMBB, IoT, URLLC. Same type of service might be required by different tenants and therefore might be provided by different slices. Throughout the application, the term "service" can be replaced with "slice" or "service and/or slice".

In step 306, the UE 120 decide whether to apply the offset for the given second cell based on the at least one criterion and the determined at least one network slice. It may be noted that since the slices associated to the UE 120 may vary from the slices associated to another UE, then whether the offset is applied for the given second cell may also vary between these UEs. E.g. the UE 120 may decide to apply the offset while the other UE with different associated slices may decide not to apply the offset for this cell.

Consequently, the UE 120 in step 308 determines a quality measure for the given second cell based on the signal measurements and the offset, if applied to the given second cell. In an embodiment, the offset is applied to the given second cell. In an embodiment, if the offset is not applied by the UE for the second cell, it equals to applying a zero offset for that particular cell by that particular UE. Consequently, step 308 may be understood as determining the quality measure for the given second cell based on the signal measurements and the offset, wherein the offset is zero or non-zero.

The use of the offset may be seen as an enhancement to the cell ranking criteria for cell re-selection. In an embodiment, applying the offset comprises decreasing the result of the signal measurement of the respective second cell (from step 302) by the amount of the offset, in order to obtain the quality measure of the respective second cell. It may be that for some second cells, the quality measure is lower than indicated by the signal measure result (if offset is applied) and for some cells the signal measure is the same as the quality measure (if offset is not applied).

In step 310, the UE decides whether to select the given second cell in cell selection or cell reselection procedures based on the determined quality measure. For example, the quality measure may be used as the Qmeas in the cell ranking procedure explained above.

This step of 310 may comprise comparing the quality measure to quality measures of possible other second cells detectable to the UE 120. In case there are other cells in the vicinity and detectable by the UE, the UE may perform the steps 302-308 for each of the second cells detected. If the broadcast does not include offsets for certain detectable neighboring cell, then the offset for that is zero and/or the quality measure of that cell is based on the signal measurement of that cell. In case of plurality of neighboring cells, step 310 may result in selecting the best available neighboring cell based on the quality measure. It may be noted that there may be more neighboring cells than there are second cells. For example, the UE may measure all neighboring cells, but apply the offset for one or more of those based on the broadcast. Nevertheless, a quality measure may be determined for all neighboring cells and all neighboring cells may be considered for the cell selection/reselection.

In case there is no other neighboring cell available than the one for which information is broadcasted, the deciding of step 310 may comprise deciding whether the quality measure of that second cell is sufficient enough for selecting the cell, e.g. over the first cell.

The UE may determine the quality measure also for the first cell. In an embodiment, the UE does not apply the offset to the first cell. In an embodiment, the broadcast also comprises the two IEs for the first cell, in which case the offset may be applied to the first cell, depending on the indicated criterion for the first cell and the slice associated with the UE in step 304. In other words, in this case, the steps 302-308 may be performed for the first cell as well to derive the quality measure of the first cell, instead of e.g. only performing the signal measurements of the first cell and using the result of the signal measurements as the quality measure of the first cell.

Let us look closer on what the information (e.g. the second IE) indicating the at least one criterion may comprise. In an embodiment, the second IE comprises, for each of the at least one second cell, an indication of at least one network slice. Even if described so that the one or more criteria comprises the indication of at least one slice, there may be further criteria that the UE needs to consider before applying the offset. Only if all criteria are met, the UE applies the corresponding offset. As one non-limiting example, the further criterion may be associated with access barring, signal strength/quality or load status of the corresponding second cell.

In an embodiment, the at least one indicated slice comprises, for one or more of the at least one second cell, only a subset of all the slices supported by the respective second cell. In other words, there is at least one second cell indicated in the broadcast for which the indicated slices comprise only a subset of all slices supported by that second cell. For example, if one second cell supports services/slices A, B, C, the indicated slices may comprise only slices A and B (or services associated with slices A and B). On the other hand, if one second cell supports only service/slice C, the indicated slice may comprise this slice/service C.

In an embodiment, the at least one indicated slice comprises, for one or more of the at least one second cell, only at least one slice that is supported by both the respective second cell and the first cell. For example, if one second cell supports services/slices A, B, C, and the first cell supports slices A and B, the indicated slices may comprise only slices A and B (or services associated with slices A and B). In an embodiment, all the services/slices supported by both cells are indicated in the criterion IE of the broadcast.

In an embodiment, the at least one indicated slice comprises, for one or more of the at least one second cell, at least one slice not supported by the respective second cell but supported by the first cell. For example, if one second cell supports services/slices A and B, while the firsts cell supports A, B and C, the indicated slices may comprise slice C.

How to define which services/slices are indicated in the criterion information element may vary depending on the embodiment.

In an embodiment, the indication of the at least one slice comprises only an indication of slices of at least one predetermined type.

In an embodiment, the at least one predetermined type of slices comprises slices which are supported in a broader coverage area than a tracking area of the first cell. An example of such slices may be slice providing wide area basic coverage services and/or enterprise services. Regarding what is "wide" and what is "limited" coverage may be determined based on a predefined thresholds or criteria. The broadcasted information may be called an exclusion list in this embodiment, as the indicated services/slices exclude service/slices which are supported only in limited areas.

In an embodiment, the at least one predetermined type of slices comprises slices which are supported in a coverage area not larger (e.g. smaller than or of equal size) than the tracking area of the first cell. An example of such slices may be slices providing enterprise services which need to be supported in a limited area. The broadcasted information may be called an inclusion list in this embodiment, as the indicated services/slices include service/slices which are supported only in limited areas.

There could be different requirements for different slices of the enterprise. In some cases, the enterprise slice might also need a wider coverage, for example, a IoT slice for product tracking in logistics. On the contrary, a slice for robotic manufacturing may only be needed in factory area. Therefore, both flavours of enterprise slices are possible, as said in the two earlier paragraphs.

In an embodiment, the at least one predetermined type of slice comprises a default slice. An example of a default slice is a slice that is used to provide basic coverage for all UEs, such as an eMBB slice.

As the UE 120 knows which slices/services it is associated with (e.g. the allowed slices for the UE determined in step 304) and can determine, from the broadcast, the indicated slices/services per each second cell, the UE 120 may determine if the UE 120 needs to apply the corresponding offset or not based on these information and a rule. The rule for deciding this may be preconfigured to the UE, for example.

The offset, if applied, decreases the determined quality measure of the corresponding second cell. In alternative implementation, depending on the rule, the offset may be used in the opposite manner, i.e. to increase the determined quality measure of the corresponding second cell.

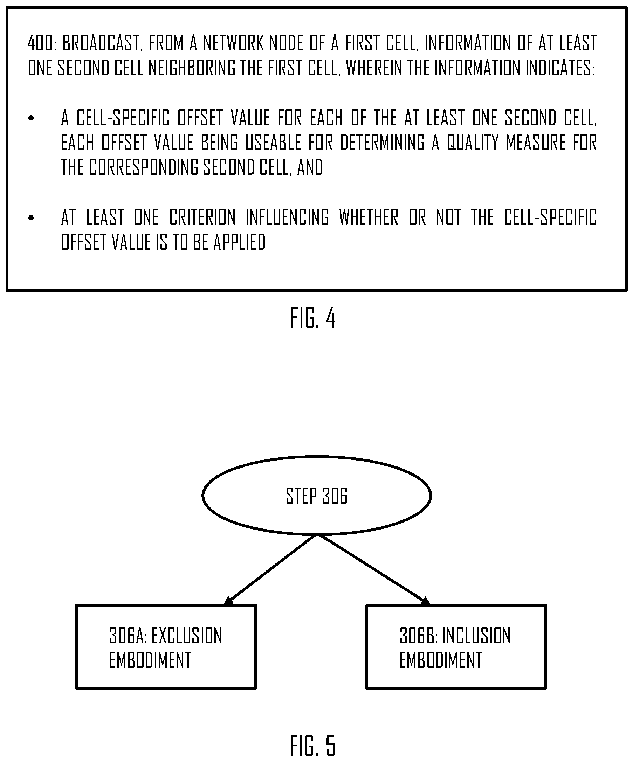

Let us next consider a few embodiments regarding how the UE decides whether to apply the offset with reference to Figure 5 and below Tables 3 and 4.

In one embodiment, the UE 120 checks whether or not the at least one slice indicated for the given second cell in the broadcast of step 300 includes all the determined (in step 304) at least one slice associated with the UE 120. The rule in this embodiment may be as follows:
- decide to apply the offset value on the signal measurements of the given second cell when the at least one slice indicated for the given second cell does not include all the determined at least one slice associated with the UE 120, and
- decide to refrain from applying (i.e. decide not to apply) the offset value on the signal measurements of the given second cell when the at least one slice indicated for the given second cell includes all the determined at least one slice associated with the UE 120.

Since in this embodiment, the offset is applied only if the at least one slice indicated for the given second cell does not include all the determined at least one slice associated with the UE 120, the embodiment may be called an exclusion embodiment 306A in Figure 5, and represent one embodiment of how to realize step 306 of Figure 3. In one embodiment, it may take use of the exclusion list referred to above.

Let us take a look at this exclusion embodiment closer with Table 3.

**Table 3: Broadcasted information for the exclusion embodiment**

| **Source Cell (SIB Broadcasting Cell)** | **Neighbor Cell** | **Slice Offset** | **Exclusion List** |
|---|---|---|---|
| **Cell 11** | Cell 1 | Q_offset_{cell11-cell1} | Slice A, Slice B |
| | Cell 2 | Q_offset_{cell11-cell2} | Slice A, Slice B |
| **Cell 12** | Cell 1 | Q_offset_{cell12-cell1} | Slice A, Slice B |
| | Cell 2 | Q_offset_{cell12-cell2} | Slice A, Slice B |
| | Cell 5 | Q_offset_{cell12-cell5} | Slice A |
| **Cell 2** | Cell 3 | Q_offset_{cell2-cell3} | Slice A |
| | Cell 5 | Q_offset_{cell2-cell5} | Slice A |
| **Cell 1** | Cell 4 | Q_offset_{cell1-cell4} | Slice A, Slice D |
| | Cell 11 | Q_offset_{cell1-cell11} | Slice A, Slice B |
| | Cell 12 | Q_offset_{cell1-cell12} | Slice A, Slice B |
| **Cell 4** | Cell 1 | Q_offset_{cell4-cell1} | Slice A |
| | Cell 3 | Q_offset_{cell4-cell3} | Slice A |

As said, the first cell broadcasts neighbour cell-specific offsets for cell (re)selection. In this embodiment, these offsets are applied by all UEs except those whose all allowed S-NSSAIs are from the exclusion list that is also broadcasted by the first cell. An example information to be included in the SIBs of different cells (here cells 11, 12,2, 1 and 4) are shown in Table 3. Cells 5 or 3, when acting as the first cells, need not broadcast these IEs since all neighboring cells support the slice A supported by cells 3 and 5. Cell 2 is not neighboring cell 4 (no overlapping coverage area), so Table 3 does not show cell 2-cell4 relationship. Cell 2 need not transmit info on cells 11, 12 and 1, since those have the same or more broad slice support.

The UE receiving the broadcast from the first cell may determine not to apply the offset for the first cell.

Based on the above information from SIBs, the behaviour of different UEs 120, 122, 124 would be different when performing neighbouring cell ranking for cell (re-)selection. The behaviour of the UEs 120, 122, 124 are described in the following.
- For UE 120 (with allowed Slice A, Slice B, Slice C, as explained above) in Cell 11: prefer cell 12 (only TA1 in RA) over cell 1 or cell 2 as only cell 12 supports all three slices of the UE 120. That is:
   ∘ R_{cell11} = Qmeas,s + Qhyst - Qoffsetₜₑₘₚ (camped cell)
   ∘ R_{cell1} = Q_{meas,n} - Qoffset - Qoffsetₜₑₘₚ - Q_offset_{cell11-cell1} (deprioritize cell 1 as the exclusion list does not match all allowed slices of UE 120)
   ∘ R_{cell2} = Q_{meas,n} - Qoffset - Qoffsetₜₑₘₚ - Q_offset_{cell11-cell2} (deprioritize cell 2 as the exclusion list does not match all allowed slices of UE 120)
   ∘ R_{cell12} = Q_{meas,n} - Qoffset - Qoffsetₜₑₘₚ (the same slice support, so no slice-specific offset applied)
- For UE 122 (with allowed Slice A, Slice B) in Cell 12: prefer Cell 2, Cell 1 or Cell 11 and avoid Cell 5 as far as possible:
   ∘ R_{cell12} = Qmeas,s + Qhyst - Qoffsetₜₑₘₚ (camped cell)
   ∘ R_{cell11} = Q_{meas,n} - Qoffset - Qoffsetₜₑₘₚ (the same slice support, so no slice-specific offset applied)
   ∘ R_{cell2} = Q_{meas,n} - Qoffset - Qoffsetₜₑₘₚ (the same subset slice support in the exclusion list, so no slice-specific offset applied)
   ∘ R_{cell1} = Q_{meas,n} - Qoffset - Qoffsetₜₑₘₚ (the same subset slice support in the exclusion list, so no slice-specific offset applied)
   ∘ R_{cell5} = Q_{meas,n} - Qoffset - Qoffsetₜₑₘₚ - Q_offset_{cell12-cell5} (deprioritize cell 5 as the exclusion list does not match all allowed slices of UE2)
- For UE 124 (with allowed slice A) in Cell 11: no preference as all neighbouring cells support slice A:
   ∘ R_{cell11} = Qmeas,s +Q_{hyst} - Qoffsetₜₑₘₚ (camped cell)
   ∘ R_{cell1} = Q_{meas,n} - Qoffset - Qoffsetₜₑₘₚ (the same subset slice support in the exclusion list, so no slice-specific offset applied)
   ∘ R_{cell2} = Q_{meas,n} - Qoffset - Qoffsetₜₑₘₚ (the same subset slice support in the exclusion list, so no slice-specific offset applied)
   ∘ R_{cell12} = Q_{meas,n} - Qoffset - Qoffsetₜₑₘₚ (the same subset slice support in the exclusion list, so no slice-specific offset applied)

In the above exclusion embodiment, no offset is considered for the cells that are in the same TA as the cell sending the SIB, since the cells in the same TA support the same set of slices (according to assumption of TA homogeneity).

In another embodiment depicted with reference numeral 306B in Figure 5, the UE 120 checks whether or not the at least one slice indicated for the given second cell in the broadcast of step 300 includes at least one of the determined (in step 304) at least one slice associated with the UE. The rule in this embodiment may be as follows:
- decide to apply the offset value on the signal measurements of the given second cell when the at least one slice indicated for the given second cell includes at least one of the determined at least one slice associated with the UE 120, and
- decide to refrain from applying (i.e. decide not to apply) the offset value on the signal measurements of the given second cell when the at least one slice indicated for the given second cell does not include any of the determined at least one slice associated with the UE 120.

Since in this embodiment, the offset is applied only if the at least one slice indicated for the given second cell includes at least one of the determined at least one slice associated with the UE 120, the embodiment may be called an inclusion embodiment 306B in Figure 5, as an alternative embodiment of how to realize step 306 of Figure 3. In one embodiment, it may take use of the inclusion list referred to above. Let us take a look at this inclusion embodiment closer with Table 4.

**Table 4: Broadcasted information for the inclusion embodiment.**

| **Source Cell (SIB Broadcasting Cell)** | **Neighbour Cell** | **Slice Offset** | **Inclusion List** |
|---|---|---|---|
| **Cell 11** | Cell 1 | Q_offset_{cell11-cell1} | Slice C |
| | Cell 2 | Q_offset_{cell11-cell2} | Slice C |
| **Cell 12** | Cell 1 | Q_offset_{cell12-cell1} | Slice C |
| | Cell 2 | Q_offset_{cell12-cell2} | Slice C |
| | Cell 5 | Q_offset_{cell12-cell5} | Slice B, C |
| **Cell 2** | Cell 3 | Q_offset_{celll2-cell3} | Slice B |
| | Cell 5 | Q_offset_{cell2-cell5} | Slice B |
| **Cell 1** | Cell 4 | Q_offset_{cell1-cell4} | Slice B |
| **Cell 4** | Cell 1 | Q_offset_{cell4-cell1} | Slice D |
| | Cell 2 | Q_offset_{cell4-cell2} | Slice D |
| | Cell 3 | Q_offset_{cell4-cell3} | Slice D |

As said, the first cell broadcasts neighbour cell -specific offsets for cell (re)selection and criterion on when to use the offset. In this inclusion embodiment, these offsets are applied by all UEs whose at least one allowed S-NSSAIs is from the inclusion list that is also broadcasted by the first cell. An example information to be included in the SIBs of different cells (here cells 11, 12 and 2, to show a few examples) are shown in Table 4. Cells 3 or 5 as the first cells need not broadcast these IEs since all neighboring cells support the slice A, which is the only slice supported by cells 3 and 5.

In one embodiment, the inclusion list can be utilized where such a list can be generated from the difference set of slices between two neighboring cells, i.e., InclusionList-_{cell2-cell3}= {Slice Support of Cell 2} - {Slice Support of Cell 3} = {A, B}- {A} = B. I.e. the inclusion list includes the slice IDs that are supported in cell 2 but not in cell 3. As a further example, the broadcast from cell 2 need not comprise any IE for e.g. cell 12, even if cell 12 is in different TA. This is because the slice support of cell 12 comprise all the slices supported by cell 2.

With the above scenario, the UEs with an associated Slice B shall deprioritize the Cell 3 by using the indicated slice-specific offset value, i.e., ${R}_{cell 2} = {Q}_{meas , s} + {Q}_{hyst} - {Qoffset}_{temp}$ ${R}_{cell 3} = {Q}_{meas , n} - Qoffset - {Qoffset}_{temp} - {Q}_{offsetcell 12 - cell 3}$

Also here, no offset is considered for the cells that are in the same TA as the first cell, since the cells in the same TA support the same set of slices. Moreover, when the neighbouring cell can support more enterprise slices than the first cell, no offset is considered.

Based on the above information from SIBs, the behaviour of different UEs 120, 122, 124 would be different when performing neighbouring cell ranking for cell (re-)selection. The behaviour of the UEs 120, 122, 124 are described in the following.
- For UE 120 (with allowed Slice A, Slice B, Slice C) in Cell 11: prefer cell 12 (only TA1 in RA) over cell 1 or cell 2 as only cell 12 supports all three slices of the UE1. That is:
   ∘ R_{cell11} = Qmeas,s + Qhyst - Qoffsetₜₑₘₚ (camped cell)
   ∘ R_{cell1} = Q_{meas,n} - Qoffset - Qoffsetₜₑₘₚ - Q_offset_{cell11-cell1} (deprioritize cell 1 as the inclusion list matches UE 120 allowed Slice C)
   ∘ R_{cell2} = Q_{meas,n} - Qoffset - Qoffsetₜₑₘₚ - Q_offset_{cell11-cell2} (deprioritize cell 2 as the inclusion list matches UE 120 allowed Slice C)
   ∘ R_{cell12} = Q_{meas,n} - Qoffset - Qoffsetₜₑₘₚ (the same slice support, so no slice-specific offset applied)
- For UE 122 (with allowed Slice A, Slice B) in Cell 12: prefer Cell 2, Cell 1 or Cell 11 or stay in Cell 12, and avoid Cell 5 as far as possible:
   ∘ R_{cell12} = Qmeas,s + Qhyst - Qoffsetₜₑₘₚ (camped cell)
   ∘ R_{cell11} = Q_{meas,n} - Qoffset - Qoffsetₜₑₘₚ (the same slice support, so no slice-specific offset applied)
   ∘ R_{cell2} = Q_{meas,n} - Qoffset - Qoffsetₜₑₘₚ (the inclusion list does not match UE 122 allowed slice, so no slice-specific offset applied)
   ∘ R_{cell1} = Q_{meas,n} - Qoffset - Qoffsetₜₑₘₚ (the inclusion list does not match UE 122 allowed slice, so no slice-specific offset applied)
   ∘ R_{cell5} = Q_{meas,n} - Qoffset - Qoffsetₜₑₘₚ - Q_offset_{cell12-cell5} (deprioritize cell 5 as the inclusion list matches UE 122 allowed Slice B)
- For UE 124 (with allowed Slice A) in Cell 11: no preference as all neighbouring cells support slice A:
   ∘ R_{cell11} = Qmeas,s + Qhyst - Qoffsetₜₑₘₚ (camped cell)
   ∘ R_{cell1} = Q_{meas,n} - Qoffset - Qoffsetₜₑₘₚ (the inclusion list does not match UE 124 allowed slice, so no slice-specific offset applied)
   ∘ R_{cell2} = Q_{meas,n} - Qoffset - Qoffsetₜₑₘₚ (the inclusion list does not match UE 124 allowed slice, so no slice-specific offset applied)
   ∘ R_{cell12} = Q_{meas,n} - Qoffset - Qoffsetₜₑₘₚ (the same slice support, so no slice-specific offset applied)

In an embodiment, the above approaches 306A and 306B may be directly applied to more homogenous scenarios, e.g., when the slice support is uniform throughout the enterprise region. Such a scenario would be for example a modified Figure 2 where the cells 1, 2, 11 and 12 would belong to same TA1 and provide uniform slice support of slices A, B, C. In this case, the UEs with associated enterprise slices are kept in the enterprise region as far as possible by using the slice-specific offset values toward the neighboring cells considering the exclusion list or inclusion list, for example.

Some advantages of the proposal include that owing to the solution, the UEs 120, 122, 124 stay in the TAs where their allowed S-NSSAIs are supported. This may be particularly relevant for the enterprise areas and/or tenant-specific areas but beneficial in other scenario as well. The embodiment with the exclusion list may be especially beneficial if there is a large number of enterprise slices (exclusion list is short), whereas the approach with the inclusion list could be more beneficial when there are fewer number of enterprise slices (the inclusion list is short).

As one alternative solution, the first cell could broadcast all of the slice supports of all neighboring cells. In such case, the UE receiving the broadcast could directly see which neighboring cells support its required slices and connect to that. However, since each cell may support a very large number of network slices, such a broadcast would be highly resource consuming. The proposed solution may provide the same effect with reasonable signaling overhead. As further envisaged possible alternative solution may take use of dedicated signaling for a UE in RRC connected mode. However, this solution may not be able to provide the required information to all UEs in the cell, out of which not all may be RRC connected to the cell but camp there in an RRC idle mode.

Figure 4 depicts the proposed solution from the point of view of the network node broadcasting the info, such as network node of any of the cells of Figure 1 or 2. In step 400, the network node (e.g. gNB) of the first cell broadcasts information of at least one second cell neighboring the first cell. As explained above in connection of Figure 3, the information indicates a cell-specific offset value for each of the at least one second cell, each offset value being useable for determining (by a user equipment receiving the broadcast) a quality measure for a corresponding second cell. The information further comprises at least one criterion indicating whether or not the cell-specific offset value is to be applied.

All the embodiments described in connection of Figures 2 and 3 are applicable to the network side as well. For example, the IE related to the at least one criterion comprises, for each of the at least one second cell, an indication of at least one slice.

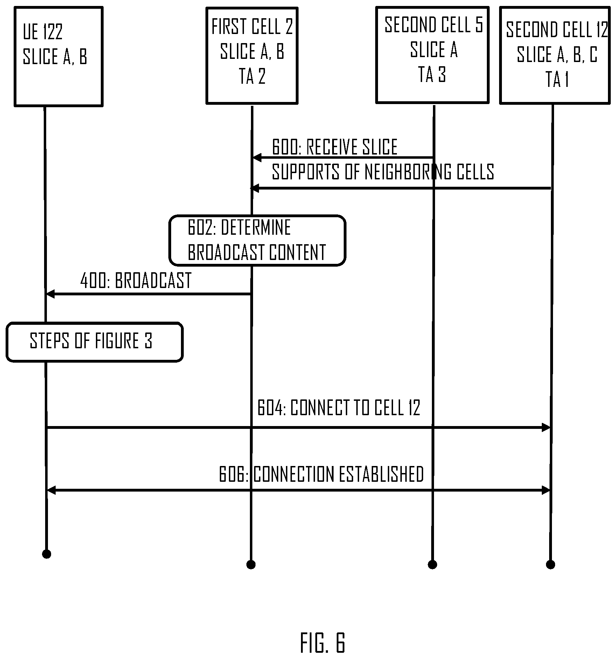

Figure 6 depicts a signaling flow diagram between first cell (here cell 2 of Figure 2), a plurality of second cells (here two, cell 12 and cell 5) and the UE (e.g. UE 122 using slices A and B). As shown in Figure 6, step 600, the second cells 12 and 5 indicate e.g. via Xn connection their slice supports to the first cell 2. Alternatively, the slice supports of neighboring cells may be preconfigured to the first cell. The slice support may be updated via Xn, for example, only if any of the second cells modifies its slice supports. In step 602, the network node of the first cell 2 determines the content of the broadcast. This may include e.g. determination of the offsets (the value and for which second cells the cell-specific offset is to be provided), and the determination of the criterion IE of the broadcast (this may refer to e.g. inclusion list or exclusion list). In step 400, the first cell 2 may broadcast the offsets and respective criteria to the UEs. The receiving UE may then perform the steps of Figure 3.

Let us imagine, for example, that the signal measurements of respective RSRPs indicate that cell ranking order is [cell 5, cell 12, cell 2]. This would mean that the UE tries to establish connection (e.g. with random access) to cell 5. However, cell 5 does not support slice B required by UE. Therefore, owing to the proposed steps 306 and 308, the UE offsets the signal measurement result of cell 5 with the offset but does not apply the offset for cells 2 and 12 (since these provide all the slices required by UE 120). In this case of Figure 6, the broadcast information may comprise the offset only for cell 5 and a criterion influencing when to use the criterion of cell 5. As a result, the cell ranking order, modified with the offset, may be based on the determined quality measure and may be e.g. [cell 12, cell 5, cell 2]. The placement of cell 5 in the modified cell ranking depends on how good the RSRP from cell 5 is and what is the value of the offset for cell 5. If, even after applying the offset, the quality measure of cell 5 is best, then UE 120 may try to connect to cell 5 even if it does not support slice B. However, in this example embodiment, the offset decreases the cell quality of cell 5 such that it drops in the cell ranking after cell 12. Accordingly, in step 604, the UE 120 connects to cell 12, enters from the RRC idle mode to RRC connected mode, and in step 606 may perform data communication with the cell 12 in RRC connected mode. It may be noted that e.g. UE 124 using only slice A would not apply to offset to any these cells 2, 5 and 12. Thus, such a UE 124 might connect to cell 5 if the RSRP (or any other quality measure used for differentiating cell quality) from that cell is the best. In this example, the UEs are considered to enter the connected mode. Nevertheless, as also described before, the UEs may just camp on the determined cell and stay in the idle mode.

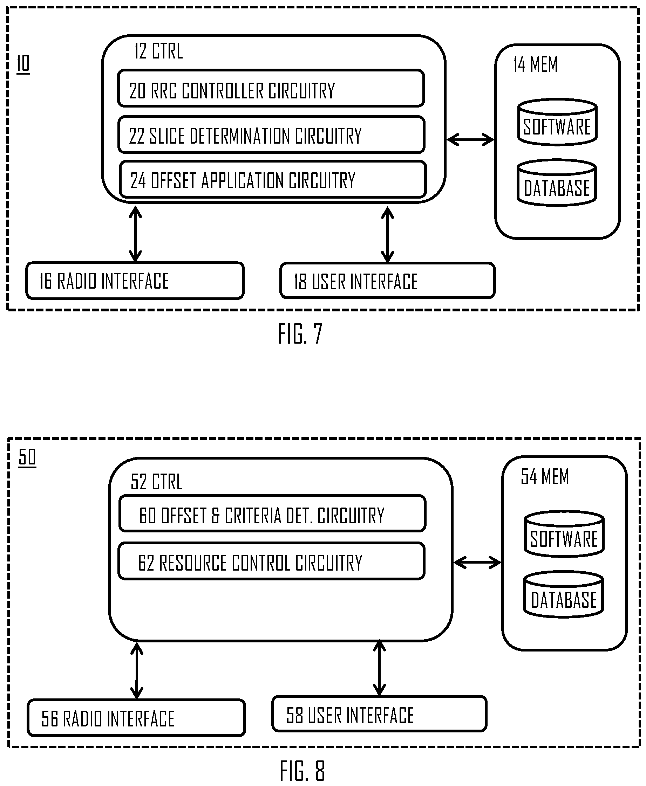

An embodiment, as shown in Figure 7, provides an apparatus 10 comprising a control circuitry (CTRL) 12, such as at least one processor, and at least one memory 14 including a computer program code (software), wherein the at least one memory and the computer program code (software), are configured, with the at least one processor, to cause the apparatus to carry out any one of the above-described processes. The memory may be implemented using any suitable data storage technology, such as semiconductor-based memory devices, flash memory, magnetic memory devices and systems, optical memory devices and systems, fixed memory and removable memory. The memory may comprise a database for storing data.

In an embodiment, the apparatus 10 may comprise the terminal device of a communication system, e.g. a user terminal (UT), a computer (PC), a laptop, a tabloid computer, a cellular phone, a mobile phone, a communicator, a smart phone, a palm computer, a mobile transportation apparatus (such as a car), a household appliance, or any other communication apparatus, commonly called as UE in the description. Alternatively, the apparatus is comprised in such a terminal device. Further, the apparatus may be or comprise a module (to be attached to the UE) providing connectivity, such as a plug-in unit, an "USB dongle", or any other kind of unit. The unit may be installed either inside the UE or attached to the UE with a connector or even wirelessly.

In an embodiment, the apparatus 10 is or is comprised in the UE 120, 122 or 124. The apparatus may be caused to execute some of the functionalities of the above described processes, such as the steps of Figure 3.

The apparatus may further comprise a radio interface (TRX) 16 comprising hardware and/or software for realizing communication connectivity according to one or more communication protocols. The TRX may provide the apparatus with communication capabilities to access the radio access network, for example.

The apparatus may also comprise a user interface 18 comprising, for example, at least one keypad, a microphone, a touch display, a display, a speaker, etc. The user interface may be used to control the apparatus by the user.

The control circuitry 12 may comprise an RRC controller circuitry 20 for changing RRC state of the UE. This may include e.g. selecting or re-selecting a cell in RRC idle mode, determining cell ranking, etc., according to any of the embodiments. The control circuitry 12 may further comprise a slice determination circuitry 22 for determining which slices/services are allowable to the apparatus, according to any of the embodiments. The control circuitry 12 may further comprise an offset application circuitry 22 for determining whether to apply the offset for a given second cell and thus modifying the cell ranking, according to any of the embodiments.

An embodiment, as shown in Figure 8, provides an apparatus 50 comprising a control circuitry (CTRL) 52, such as at least one processor, and at least one memory 54 including a computer program code (software), wherein the at least one memory and the computer program code (software), are configured, with the at least one processor, to cause the apparatus to carry out any one of the above-described processes. The memory may be implemented using any suitable data storage technology, such as semiconductor-based memory devices, flash memory, magnetic memory devices and systems, optical memory devices and systems, fixed memory and removable memory. The memory may comprise a database for storing data.

In an embodiment, the apparatus 50 may be or be comprised in a network node, such as in gNB/gNB-CU/gNB-DU of 5G. In an embodiment, the apparatus is or is comprised in the network node 110. The apparatus may be caused to execute some of the functionalities of the above described processes, such as the steps of Figure 4.

In an embodiment, a CU-DU (central unit - distributed unit) architecture is implemented. In such case the apparatus 50 may be comprised in a central unit (e.g. a control unit, an edge cloud server, a server) operatively coupled (e.g. via a wireless or wired network) to a distributed unit (e.g. a remote radio head/node). That is, the central unit (e.g. an edge cloud server) and the radio node may be stand-alone apparatuses communicating with each other via a radio path or via a wired connection. Alternatively, they may be in a same entity communicating via a wired connection, etc. The edge cloud or edge cloud server may serve a plurality of radio nodes or a radio access networks. In an embodiment, at least some of the described processes may be performed by the central unit. In another embodiment, the apparatus may be instead comprised in the distributed unit, and at least some of the described processes may be performed by the distributed unit. In an embodiment, the execution of at least some of the functionalities of the apparatus 50 may be shared between two physically separate devices (DU and CU) forming one operational entity. Therefore, the apparatus may be seen to depict the operational entity comprising one or more physically separate devices for executing at least some of the described processes. In an embodiment, the apparatus controls the execution of the processes, regardless of the location of the apparatus and regardless of where the processes/functions are carried out.

The apparatus may further comprise communication interface (TRX) 56 comprising hardware and/or software for realizing communication connectivity according to one or more communication protocols. The TRX may provide the apparatus with communication capabilities to communicate with the UE or with another gNBs or with core network, for example. The apparatus may also comprise a user interface 58 comprising, for example, at least one keypad, a microphone, a touch display, a display, a speaker, etc. The user interface may be used to control the apparatus by the user.

The control circuitry 52 may comprise an offset & criteria determination circuitry 60 for determining the offsets and criteria, according to any of the embodiments. The control circuitry 12 may comprise a resource control circuitry 62 e.g. for controlling resource usage with respect to UEs, for determining whether to allow access of the UE, according to any of the embodiments.

In an embodiment, an apparatus carrying out at least some of the embodiments described comprises at least one processor and at least one memory including a computer program code, wherein the at least one memory and the computer program code are configured, with the at least one processor, to cause the apparatus to carry out the functionalities according to any one of the embodiments described. According to an aspect, when the at least one processor executes the computer program code, the computer program code causes the apparatus to carry out the functionalities according to any one of the embodiments described. According to another embodiment, the apparatus carrying out at least some of the embodiments comprises the at least one processor and at least one memory including a computer program code, wherein the at least one processor and the computer program code perform at least some of the functionalities according to any one of the embodiments described. Accordingly, the at least one processor, the memory, and the computer program code form processing means for carrying out at least some of the embodiments described. According to yet another embodiment, the apparatus carrying out at least some of the embodiments comprises a circuitry including at least one processor and at least one memory including computer program code. When activated, the circuitry causes the apparatus to perform the at least some of the functionalities according to any one of the embodiments described.

As used in this application, the term 'circuitry' refers to all of the following: (a) hardware-only circuit implementations, such as implementations in only analog and/or digital circuitry, and (b) combinations of circuits and soft-ware (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present. This definition of 'circuitry' applies to all uses of this term in this application. As a further example, as used in this application, the term 'circuitry' would also cover an implementation of merely a processor (or multiple processors) or a portion of a processor and its (or their) accompanying software and/or firmware. The term 'circuitry' would also cover, for example and if applicable to the particular element, a baseband integrated circuit or applications processor integrated circuit for a mobile phone or a similar integrated circuit in a server, a cellular network device, or another network device.

In an embodiment, at least some of the processes described may be carried out by an apparatus comprising corresponding means for carrying out at least some of the described processes. Some example means for carrying out the processes may include at least one of the following: detector, processor (including dual-core and multiple-core processors), digital signal processor, controller, receiver, transmitter, encoder, decoder, memory, RAM, ROM, soft-ware, firmware, display, user interface, display circuitry, user interface circuitry, user interface software, display software, circuit, antenna, antenna circuitry, and circuitry.

The techniques and methods described herein may be implemented by various means. For example, these techniques may be implemented in hardware (one or more devices), firmware (one or more devices), software (one or more modules), or combinations thereof. For a hardware implementation, the apparatus(es) of embodiments may be implemented within one or more application-specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a combination thereof. For firmware or software, the implementation can be carried out through modules of at least one chip set (e.g. procedures, functions, and so on) that perform the functions described herein. The software codes may be stored in a memory unit and executed by processors. The memory unit may be implemented within the processor or externally to the processor. In the latter case, it can be communicatively coupled to the processor via various means, as is known in the art. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

Embodiments as described may also be carried out in the form of a computer process defined by a computer program or portions thereof. Embodiments of the methods described may be carried out by executing at least one portion of a computer program comprising corresponding instructions. The computer program may be in source code form, object code form, or in some intermediate form, and it may be stored in some sort of carrier, which may be any entity or device capable of carrying the program. For example, the computer program may be stored on a computer program distribution medium readable by a computer or a processor. The computer program medium may be, for example but not limited to, a record medium, computer memory, read-only memory, electrical carrier signal, telecommunications signal, and software distribution package, for example. The computer program medium may be a non-transitory medium. Coding of software for carrying out the embodiments as shown and described is well within the scope of a person of ordinary skill in the art.

## Claims

1. An apparatus (10) configured to operate in a radio resource control, RRC, idle or inactive mode of operation, comprising:
means for receiving (300), over broadcast from a network node (110) of a first cell, information indicating a cell-specific offset value for each of at least one second cell neighboring the first cell and at least one criterion influencing whether or not the cell-specific offset value is to be applied;
means for performing (302) signal measurements of a second cell of the at least one second cell neighboring the first cell;
means for determining (304) at least one network slice associated with the apparatus;
means for deciding (306) whether to apply the offset for the second cell based on the at least one criterion and the determined at least one network slice;
means for determining (308) a quality measure for the second cell based on the signal measurements and the offset, if applied to the second cell;
means for deciding (310) whether to select the second cell in cell selection or cell reselection procedure based on the determined quality measure, wherein the information indicating the at least one criterion comprises, for each of the at least one second cell, an indication of at least one network slice, wherein the at least one indicated network slice comprises, for one or more of the at least one second cell, at least one of the following:
only a subset of all the network slices supported by the respective second cell,
at least one network slice supported by both the respective second cell and the first cell, or
at least one network slice not supported by the respective second cell but supported by the first cell, wherein the indicated at least one network slice comprises only network slices of at least one predetermined type, wherein the at least one predetermined type of network slice comprises network slices which are one of:
supported in a broader coverage area than a tracking area of the first cell, or
supported in a coverage area not larger than a tracking area of the first cell, wherein the at least one second cell comprises only cells that are not in the same tracking area as the first cell, wherein the at least one second cell comprises only cells that do not support all of the network slices supported by the first cell, wherein the value of the offset for a second cell is dependent on which network slices the second cell supports, wherein the apparatus further comprises means for checking whether or not the at least one network slice indicated for the second cell includes all the determined at least one network slice associated with the apparatus;
means for deciding to apply the offset value on the signal measurements of the second cell when the at least one network slice indicated for the second cell does not include all the determined at least one network slice associated with the apparatus; and
means for deciding to refrain from applying the offset value on the signal measurements of the second cell when the at least one network slice indicated for the second cell includes all the determined at least one network slice associated with the apparatus.

2. The apparatus of any preceding claim, wherein applying the offset comprises decreasing the result of the signal measurement of the respective second cell by the amount of the offset, in order to obtain the quality measure of the respective second cell.

3. Method, comprising:
receiving (300), at a user equipment (120, 122, 124) in a radio resource control, RRC, idle or inactive mode of operation and over broadcast from a network node (110) of a first cell, information indicating a cell-specific offset value for each of at least one second cell neighboring the first cell and at least one criterion influencing whether or not the cell-specific offset value is to be applied;
performing (302) signal measurements of a second cell of the at least one second cell neighboring the first cell;
determining (304) at least one network slice associated with the apparatus;
deciding (306) whether to apply the offset for the second cell based on the at least one criterion and the determined at least one network slice;
determining (308) a quality measure for the second cell based on the signal measurements and the offset, if applied to the second cell;
deciding (310) whether to select the second cell in cell selection or cell reselection procedure based on the determined quality measure, wherein the information indicating the at least one criterion comprises, for each of the at least one second cell, an indication of at least one network slice, wherein the at least one indicated network slice comprises, for one or more of the at least one second cell, at least one of the following:
only a subset of all the network slices supported by the respective second cell,
at least one network slice supported by both the respective second cell and the first cell, or
at least one network slice not supported by the respective second cell but supported by the first cell, wherein the indicated at least one network slice comprises only network slices of at least one predetermined type, wherein the at least one predetermined type of network slice comprises network slices which are one of:
supported in a broader coverage area than a tracking area of the first cell, or
supported in a coverage area not larger than a tracking area of the first cell, wherein the at least one second cell comprises only cells that are not in the same tracking area as the first cell, wherein the at least one second cell comprises only cells that do not support all of the network slices supported by the first cell, wherein the value of the offset for a second cell is dependent on which network slices the second cell supports, wherein the method further comprises checking whether or not the at least one network slice indicated for the second cell includes all the determined at least one network slice associated with the apparatus;
deciding to apply the offset value on the signal measurements of the second cell when the at least one network slice indicated for the second cell does not include all the determined at least one network slice associated with the apparatus; and
deciding to refrain from applying the offset value on the signal measurements of the second cell when the at least one network slice indicated for the second cell includes all the determined at least one network slice associated with the apparatus.

4. A computer program product comprising program instructions which, when executed by an apparatus in a radio resource control, RRC, idle or inactive mode of operation, cause the apparatus to carry out the method according to claim 4.

## Patentansprüche

1. Einrichtung (10), die dazu ausgelegt ist, in einem Leerlauf- oder Inaktiv-Betriebsmodus der Funkressourcensteuerung, RRC, zu arbeiten und Folgendes umfasst:
Mittel zum Empfangen (300) von Informationen, die einen zellspezifischen Offsetwert für jede von mindestens einer der ersten Zelle benachbarten zweiten Zelle und mindestens ein Kriterium angeben, das beeinflusst, ob der zellspezifische Offsetwert angewendet werden soll oder nicht, über Rundfunk von einem Netzwerkknoten (110) einer ersten Zelle;
Mittel zum Durchführen (302) von Signalmessungen einer zweiten Zelle der mindestens einen der ersten Zelle benachbarten zweiten Zelle;
Mittel zum Bestimmen (304) mindestens eines Netzwerk-Slices, der mit der Einrichtung assoziiert ist;
Mittel zum Entscheiden (306), ob der Offset für die zweite Zelle angewendet werden soll, basierend auf dem mindestens einen Kriterium und dem bestimmten mindestens einen Netzwerk-Slice;
Mittel zum Bestimmen (308) eines Qualitätsmaßes für die zweite Zelle basierend auf den Signalmessungen und dem Offset, falls auf die zweite Zelle angewendet;
Mittel zum Entscheiden (310), ob die zweite Zelle in einer Zellenauswahl- oder Zellenneuauswahlprozedur ausgewählt werden soll, basierend auf dem bestimmten Qualitätsmaß, wobei die Informationen, die das mindestens eine Kriterium angeben, für jede der mindestens einen zweiten Zelle eine Angabe mindestens eines Netzwerk-Slices umfassen, wobei der mindestens eine angegebene Netzwerk-Slice für eine oder mehrere der mindestens einen zweiten Zelle mindestens eines von Folgenden umfasst:
nur eine Teilmenge aller Netzwerk-Slices, die von der jeweiligen zweiten Zelle unterstützt werden,
mindestens einen Netzwerk-Slice, der sowohl von der jeweiligen zweiten Zelle als auch der ersten Zelle unterstützt wird, oder
mindestens einen Netzwerk-Slice, der nicht von der jeweiligen zweiten Zelle unterstützt wird, aber von der ersten Zelle unterstützt wird, wobei der angegebene mindestens eine Netzwerk-Slice nur Netzwerk-Slices mindestens eines vorbestimmten Typs umfasst, wobei der mindestens eine vorbestimmte Typ von Netzwerk-Slices Netzwerk-Slices umfasst, die entweder:
in einem größeren Abdeckungsbereich als ein Verfolgungsbereich der ersten Zelle unterstützt werden, oder
in einem Abdeckungsbereich unterstützt werden, der nicht größer als ein Verfolgungsbereich der ersten Zelle ist, wobei die mindestens eine zweite Zelle nur Zellen umfasst, die sich nicht in demselben Verfolgungsbereich wie die erste Zelle befinden, wobei die mindestens eine zweite Zelle nur Zellen umfasst, die nicht alle von der ersten Zelle unterstützten Netzwerk-Slices unterstützen, wobei der Wert des Offsets für eine zweite Zelle davon abhängt, welche Netzwerk-Slices die zweite Zelle unterstützt, wobei die Einrichtung ferner Mittel zum Überprüfen umfasst, ob der mindestens eine Netzwerk-Slice, der für die zweite Zelle angegeben ist, alle bestimmten des mindestens einen Netzwerk-Slices beinhaltet, die mit der Einrichtung assoziiert sind;
Mittel zum Entscheiden, den Offsetwert auf die Signalmessungen der zweiten Zelle anzuwenden, wenn der mindestens eine Netzwerk-Slice, der für die zweite Zelle angegeben ist, nicht alle bestimmten des mindestens einen Netzwerk-Slices beinhaltet, die mit der Einrichtung assoziiert sind; und
Mittel zum Entscheiden, von der Anwendung des Offsetwerts auf die Signalmessungen der zweiten Zelle abzusehen, wenn der mindestens eine Netzwerk-Slice, der für die zweite Zelle angegeben ist, alle bestimmten des mindestens einen Netzwerk-Slices beinhaltet, die mit der Einrichtung assoziiert ist.

2. Einrichtung nach einem der vorhergehenden Ansprüche, wobei das Anwenden des Offsets Verringern des Ergebnisses der Signalmessung der jeweiligen zweiten Zelle um den Betrag des Offsets umfasst, um das Qualitätsmaß der jeweiligen zweiten Zelle zu erhalten.

3. Verfahren, umfassend:
Empfangen (300) von Informationen, die einen zellenspezifischen Offsetwert für jede von mindestens einer der ersten Zelle benachbarten zweiten Zelle und mindestens ein Kriterium angeben, das beeinflusst, ob der zellenspezifische Offsetwert angewendet werden soll oder nicht, an einem Benutzergerät (120, 122, 124) in einem Leerlauf- oder Inaktiv-Betriebsmodus der Funkressourcensteuerung, RRC, und über Rundfunk von einem Netzwerkknoten (110) einer ersten Zelle;
Durchführen (302) von Signalmessungen einer zweiten Zelle der mindestens einen der ersten Zelle benachbarten zweiten Zelle;
Bestimmen (304) mindestens eines Netzwerk-Slices, der mit der Einrichtung assoziiert ist;
Entscheiden (306), ob der Offset für die zweite Zelle angewendet werden soll, basierend auf dem mindestens einen Kriterium und dem bestimmten mindestens einen Netzwerk-Slice;
Bestimmen (308) eines Qualitätsmaßes für die zweite Zelle basierend auf den Signalmessungen und dem Offset, falls auf die zweite Zelle angewendet;
Entscheiden (310), ob die zweite Zelle in einer Zellenauswahl- oder Zellenneuauswahlprozedur ausgewählt werden soll, basierend auf dem bestimmten Qualitätsmaß, wobei die Informationen, die das mindestens eine Kriterium angeben, für jede der mindestens einen zweiten Zelle eine Angabe mindestens eines Netzwerk-Slices umfassen, wobei der mindestens eine angegebene Netzwerk-Slice für eine oder mehrere der mindestens einen zweiten Zelle mindestens eines von Folgenden umfasst:
nur eine Teilmenge aller Netzwerk-Slices, die von der jeweiligen zweiten Zelle unterstützt werden,
mindestens einen Netzwerk-Slice, der sowohl von der jeweiligen zweiten Zelle als auch der ersten Zelle unterstützt wird, oder
mindestens einen Netzwerk-Slice, der nicht von der jeweiligen zweiten Zelle unterstützt wird, aber von der ersten Zelle unterstützt wird, wobei der angegebene mindestens eine Netzwerk-Slice nur Netzwerk-Slices mindestens eines vorbestimmten Typs umfasst, wobei der mindestens eine vorbestimmte Typ von Netzwerk-Slices Netzwerk-Slices umfasst, die entweder:
in einem größeren Abdeckungsbereich als ein Verfolgungsbereich der ersten Zelle unterstützt werden, oder
in einem Abdeckungsbereich unterstützt werden, der nicht größer als ein Verfolgungsbereich der ersten Zelle ist, wobei die mindestens eine zweite Zelle nur Zellen umfasst, die sich nicht in demselben Verfolgungsbereich wie die erste Zelle befinden, wobei die mindestens eine zweite Zelle nur Zellen umfasst, die nicht alle von der ersten Zelle unterstützten Netzwerk-Slices unterstützen, wobei der Wert des Offsets für eine zweite Zelle davon abhängt, welche Netzwerk-Slices die zweite Zelle unterstützt, wobei das Verfahren ferner Prüfen umfasst, ob der mindestens eine Netzwerk-Slice, der für die zweite Zelle angegeben ist, alle bestimmten des mindestens einen Netzwerk-Slices beinhaltet, die mit der Einrichtung assoziiert sind;
Entscheiden, den Offsetwert auf die Signalmessungen der zweiten Zelle anzuwenden, wenn der mindestens eine Netzwerk-Slice, der für die zweite Zelle angegeben ist, nicht alle bestimmten des mindestens einen Netzwerk-Slices beinhaltet, die mit der Einrichtung assoziiert sind; und
Entscheiden, von der Anwendung des Offsetwerts auf die Signalmessungen der zweiten Zelle abzusehen, wenn der mindestens eine Netzwerk-Slice, der für die zweite Zelle angegeben ist, alle bestimmten des mindestens einen Netzwerk-Slices beinhaltet, die mit der Einrichtung assoziiert ist.

4. Computerprogrammprodukt, umfassend Programmanweisungen, die, wenn sie von einer Einrichtung in einem Leerlauf- oder Inaktiv-Betriebsmodus der Funkressourcensteuerung, RRC, ausgeführt werden, die Einrichtung veranlassen, das Verfahren nach Anspruch 4 durchzuführen.

## Revendications

1. Appareil (10) configuré pour fonctionner dans un mode de fonctionnement de contrôle des ressources radioélectriques, RRC, au repos ou inactif, comprenant :
des moyens de réception (300), sur une diffusion depuis un nœud (110) de réseau d'une première cellule, d'informations indiquant une valeur de décalage spécifique à une cellule pour chacune d'au moins une seconde cellule voisine de la première cellule et au moins un critère influant sur l'application ou non de la valeur de décalage spécifique à une cellule ;
des moyens de réalisation (302) de mesures de signal d'une seconde cellule parmi la ou les secondes cellules voisines de la première cellule ;
des moyens de détermination (304) d'au moins une tranche de réseau associée à l'appareil ;
des moyens servant à décider (306) s'il convient d'appliquer le décalage pour la seconde cellule sur la base du ou des critères et de la ou des tranches de réseau déterminées ;
des moyens de détermination (308) d'une mesure de qualité pour la seconde cellule sur la base des mesures de signal et du décalage, s'il est appliqué à la seconde cellule ;
des moyens servant à décider (310) s'il convient de sélectionner la seconde cellule lors d'une procédure de sélection de cellule ou de resélection de cellule sur la base de la mesure de qualité déterminée, les informations qui indiquent le ou les critères comprenant, pour la ou chacune des secondes cellules, une indication d'au moins une tranche de réseau, la ou les tranches de réseau indiquées comprenant, pour une ou plusieurs des secondes cellules, au moins un des éléments suivants :
uniquement un sous-ensemble de toutes les tranches de réseau prises en charge par la seconde cellule respective,
au moins une tranche de réseau prise en charge à la fois par la seconde cellule respective et par la première cellule, ou
au moins une tranche de réseau non prise en charge par la seconde cellule respective mais prise en charge par la première cellule, la ou les tranches de réseau indiquées comprenant uniquement des tranches de réseau d'au moins un type prédéterminé, le ou les types prédéterminés de tranche de réseau comprend des tranches de réseau qui sont :
soit prises en charge dans une zone de couverture plus large qu'une zone de poursuite de la première cellule, soit
prises en charge dans une zone de couverture pas plus grande qu'une zone de poursuite de la première cellule, la ou les secondes cellules comprenant uniquement des cellules qui ne sont pas dans la même zone de poursuite que la première cellule, la ou les secondes cellules comprenant uniquement des cellules qui ne prennent pas en charge toutes les tranches de réseau prises en charge par la première cellule, la valeur du décalage pour une seconde cellule dépendant des tranches de réseau prises en charge par la seconde cellule, l'appareil comprenant en outre des moyens servant à vérifier si la ou les tranches de réseau indiquées pour la seconde cellule comprennent ou non toutes les tranches de réseau déterminées associées à l'appareil ;
des moyens servant à décider d'appliquer la valeur de décalage sur les mesures de signal de la seconde cellule lorsque la ou les tranches de réseau indiquées pour la seconde cellule ne comprennent pas toutes les tranches de réseau déterminées associées à l'appareil ; et
des moyens servant à décider de s'abstenir d'appliquer la valeur de décalage sur les mesures de signal de la seconde cellule lorsque la ou les tranches de réseau indiquées pour la seconde cellule comprennent toutes les tranches de réseau déterminées associées à l'appareil.

2. Appareil selon l'une quelconque des revendications précédentes, l'application du décalage comprenant la diminution du résultat de la mesure de signal de la seconde cellule respective de la valeur du décalage, afin d'obtenir la mesure de qualité de la seconde cellule respective.

3. Procédé, comprenant :
la réception (300), au niveau d'un équipement (120, 122, 124) d'utilisateur dans un mode de fonctionnement de contrôle des ressources radioélectriques, RRC, au repos ou inactif et sur une diffusion depuis un nœud (110) de réseau d'une première cellule, d'informations indiquant une valeur de décalage spécifique à la cellule pour chacune d'au moins une seconde cellule voisine de la première cellule et au moins un critère influant sur l'application ou non de la valeur de décalage spécifique à la cellule ;
la réalisation (302) de mesures de signal d'une seconde cellule parmi la ou les secondes cellules voisines de la première cellule ;
la détermination (304) d'au moins une tranche de réseau associée à l'équipement ;
le fait de décider (306) s'il convient d'appliquer le décalage pour la seconde cellule à partir du ou des critères et de la ou des tranches de réseau déterminées ;
la détermination (308) d'une mesure de qualité pour la seconde cellule à partir des mesures de signal et du décalage, s'il est appliqué à la seconde cellule ;
le fait de décider (310) s'il convient de sélectionner la seconde cellule lors d'une procédure de sélection de cellule ou de resélection de cellule sur la base de la mesure de qualité déterminée, les informations qui indiquent le ou les critères comprenant, pour la ou chacune des secondes cellules, une indication d'au moins une tranche de réseau, la ou les tranches de réseau indiquées comprenant, pour une ou plusieurs des secondes cellules, au moins un des éléments suivants :
uniquement un sous-ensemble de toutes les tranches de réseau prises en charge par la seconde cellule respective,
au moins une tranche de réseau prise en charge à la fois par la seconde cellule respective et par la première cellule, ou
au moins une tranche de réseau non prise en charge par la seconde cellule respective mais prise en charge par la première cellule, la ou les tranches de réseau indiquées comprenant uniquement des tranches de réseau d'au moins un type prédéterminé, le ou les types prédéterminés de tranche de réseau comprend des tranches de réseau qui sont :
soit prises en charge dans une zone de couverture plus large qu'une zone de poursuite de la première cellule, soit
prises en charge dans une zone de couverture pas plus grande qu'une zone de poursuite de la première cellule, la ou les secondes cellules comprenant uniquement des cellules qui ne sont pas dans la même zone de poursuite que la première cellule, la ou les secondes cellules comprenant uniquement des cellules qui ne prennent pas en charge toutes les tranches de réseau prises en charge par la première cellule, la valeur du décalage pour une seconde cellule dépendant des tranches de réseau prises en charge par la seconde cellule, le procédé comprenant en outre le fait de vérifier si la ou les tranches de réseau indiquées pour la seconde cellule comprennent ou non toutes les tranches de réseau déterminées associées à l'appareil ;
le fait de décider d'appliquer la valeur de décalage sur les mesures de signal de la seconde cellule lorsque la ou les tranches de réseau indiquées pour la seconde cellule ne comprennent pas toutes les tranches de réseau déterminées associées à l'appareil ; et
le fait de décider de s'abstenir d'appliquer la valeur de décalage sur les mesures de signal de la seconde cellule lorsque la ou les tranches de réseau indiquées pour la seconde cellule comprennent toutes les tranches de réseau déterminées associées à l'appareil.

4. Produit-programme informatique comprenant des instructions de programme qui, lorsqu'elles sont exécutées par un appareil dans un mode de fonctionnement de contrôle des ressources radioélectriques, RRC, au repos ou inactif, amènent l'appareil à réaliser le procédé selon la revendication 4.
